(19) Europäisches Patentamt

European Patent Office

Office européen des brevets

(11) **EP 4 535 243 A1**

## (12) EUROPEAN PATENT APPLICATION

(43) Date of publication:
**09.04.2025 Bulletin 2025/15**

(21) Application number: **24157549.7**

(22) Date of filing: **14.02.2024**

(51) International Patent Classification (IPC):
**G06N 10/60** $^{(2022.01)}$

(52) Cooperative Patent Classification (CPC):
**G06N 10/60**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.10.2023 EP 23201240**

(71) Applicant: **Kipu Quantum GmbH
76137 Karlsruhe (DE)**

(72) Inventors:
- **BARRAZA AGUILERA, Nancy Korina
  Santiago (CL)**
- **ALVARADO, Gabriel
  Guangzhou (CN)**
- **ALBARRAN, Francisco
  Santiago (CL)**
- **MONTALBAN, Iraitz
  76137 Karlsruhe (DE)**
- **SOLANO, Enrique
  10405 Berlin (DE)**

## (54) VARIATIONAL COHERENT QUANTUM ANNEALING ALGORITHM

(57) The invention relates to a computer-implemented method, to a computer program and to a computer device as described herein.

Specifically, the computer-implemented method for solving an optimization problem using a quantum annealer comprises
a) providing a total Hamiltonian that consists of
- an initial Hamiltonian

- final Hamiltonian, encoding the solution to the problem being solved in its ground state, and
- an auxiliary Hamiltonian, describing local fields over each of a set of given qubits,
wherein each of the Hamiltonians has an independent schedule function, and
b) performing a time evolution of the total Hamiltonian to obtain the solution to the optimization problem.

**Description**

The invention relates to quantum computing, in particular to quantum annealers. Some embodiments of the invention are delineated by the accompanying independent claims. Further details about the invention's embodiments are also outlined in the dependent claims and the description.

In particular, the invention relates to a variational protocol (algorithm, method) for quantum annealing systems such as those based on superconducting circuits, ion traps, photonics systems and neutral atoms. The method attains precise approximations of the ground state of Hamiltonians of interest within the coherent operating window of a given superconducting device.

**Short Description of the Invention**

This summary is provided to introduce a selection of concepts in a simplified form that are further described below in the detailed description. This summary is not intended to identify key features of the invention, nor is it intended to be used to limit the scope of the invention.

The object of the invention is to provide an improved method for solving a computational problem using a quantum computer.

In a first aspect, the invention refers to a computer-implemented method for solving an optimization problem using a quantum annealer. The method comprises the steps of:

a) providing a total (also called annealing) Hamiltonian that comprises or consists of

- a first Hamiltonian, also called the initial Hamiltonian, that is characterizing a uniform transverse field over each of a given qubit,
- a second Hamiltonian, also called the final Hamiltonian, encoding the solution to the problem being solved in its ground state, and
- a third Hamiltonian, also called the auxiliary Hamiltonian, consisting of local fields over each qubit,

wherein each of the three Hamiltonians (first, second and third) has an independent schedule function (having independent initial and final conditions), and

b) performing a quantum coherent time evolution of the total (annealing) Hamiltonian to obtain the solution to the optimization problem.

The term initial Hamiltonian refers to the system Hamiltonian that is designed to have a simple and known ground state. It serves as the starting point of the annealing process. As the annealing progresses, the Hamiltonian of the system gradually transforms from this initial Hamiltonian to a problem Hamiltonian.

The term final Hamiltonian refers to the second sub-Hamiltonian that encodes the solution to the problem being solved in its ground state. In quantum annealing, the system evolves towards this Hamiltonian such that the quantum state will end up in the ground state of this Hamiltonian, effectively solving the problem.

The term auxiliary Hamiltonian refers to the third sub-Hamiltonian that consists of local fields over each qubit provided. While its specific purpose might vary depending on the problem and the annealing protocol, auxiliary Hamiltonians are typically introduced to assist the annealing process and ensure a smooth transition from the initial to the problem Hamiltonian.

The term instantaneous Hamiltonian refers to the Hamiltonian at any given point in time during the annealing or evolution process. As the annealing progresses, the system Hamiltonian changes from the initial to the final Hamiltonian. The Hamiltonian at any particular moment during this transformation can be considered the instantaneous Hamiltonian.

A time evolution is "quantum coherent" if it preserves the phase relationships between different quantum states throughout the evolution.

A cost function defines the optimization problem. It is translated into a Hamiltonian, where the ground state represents the optimal solution. This cost function shapes the energy landscape. Quantum annealing aims to find the ground state, which corresponds to the cost function's minimum. Annealing starts with a simple "initial Hamiltonian." As the process progresses, the system is increasingly governed by the cost function's energy landscape. At the end of annealing, the quantum system's state gives a solution to the optimization problem, evaluated using the cost function.

In certain embodiments of the invention, the quantum annealer is selected from the group consisting of quantum annealers based on superconducting circuits, ion traps, photonics systems and neutral atoms.

The schedule function refers to how the different Hamiltonians that are part of the total Hamiltonian change over time. In practice, the schedule function may be is implemented with physical control of the quantum system, which may be done in certain embodiments by certain control signals, for example local flux, local voltage and coupling flux for a superconducting circuit platform.

The auxiliary Hamiltonian is configured to modify the energy landscape of the problem and thereby allowing for an evolution time that allows for the method to be completed within the coherence time of the device used. The term "modify" means in this context to alter or adjust the structure and features of the energy landscape, making it more amenable for the quantum annealing process.

In certain embodiments of the invention, all three of these schedule functions are optimized independently of each other. In particular, the first Hamiltonian is driven by a first parametrized time-dependent schedule function, the second Hamiltonian is driven by a second parametrized time-dependent schedule function and the third Hamiltonian is driven by a third parametrized time-dependent schedule function, each with an independent schedule function having different initial and final conditions.

In certain embodiments of the invention, the independent optimization of the three schedule functions process is performed using a classical optimizer. In other words, the algorithm corresponds to a hybrid variational quantum algorithm capable of being realized in quantum annealers within the duration of the coherence time of the given hardware device.

In certain embodiments of the invention, the independent optimization of the three schedule functions (the first, the second and the third) is performed by applying a cubic interpolator, in particular by applying a Hermite cubic interpolator across specified points, in particular wherein the y-component of the Hermite cubic interpolator across specified points is variable and acts as a variational parameter. By optimizing the parameters of the schedule functions, the protocol can reach the optimal approximation of the ground state of the problem Hamiltonian within the coherent operating window of a quantum annealer.

In other embodiments, exactly two (two and only two) schedule functions are used (i.e., not three as in other embodiments).

In certain embodiments of the invention, the time that the quantum annealer needs for the annealing ranges from 4 nanoseconds to 1000 microseconds.

In certain embodiments of the invention, the coherent quantum annealing time ranges from 4 nanoseconds to 400 nanoseconds.

Accordingly, each schedule function may be parametrized using a piece-wise cubic interpolator, in particular a Hermite cubic interpolator through a set of points defining a parameter space. In particular, the parameter space may correspond to variational parameters used to find optimal schedule functions which minimize the energy expectation value of the final Hamiltonian calculated at the end of the annealing evolution.

In certain embodiments of the invention, a set of n points is defined as end points for each schedule function wherein 3n represents the total number of parameters, wherein each point, $p_j$, is defined as $p_j = \left(\dfrac{j}{n} + 1, y_j\right)$, wherein the set of all $y_j$ values constitutes the parameters.

In certain embodiments, the definition of the end points is given:

by $p_0 = (1,1)$ and $p_n + 1 = (0,0)$ for the initial Hamiltonian,

by $p_0 = (0,0)$ amd $p_n + 1 = (1,1)$ for the final Hamiltonian, and

by $p_0 = (0,0)$ and $p_n + 1 = (0,0)$ for the auxiliary Hamiltonian.

In certain embodiments of the invention, the method comprises applying a piece-wise polynomial cubic Hermite interpolator (p-CHIP) algorithm using these end points. The algorithm calculates the optimal schedule function (defined by the variational parameters $y_j$) for a quantum annealing process by interpolating n points per schedule function.

In certain embodiments, the method of the invention comprises an iterative process of quantum evolution, energy measurement, and parameters update. This may involve Basin-Hopping with a gradient-free optimizer (COBYLA) by minimizing a cost function by which one obtains the optimal schedule functions. In certain embodiments, this is reiteratively done until the parameters are updated only in a certain significant digit, for example in the fifth significant digit.

In certain embodiments, the method of the invention comprises performing an annealing evolution using the schedule function defined by the parameters $y_j$.

In certain embodiments, the method of the invention comprises updating the parameters $y_j$ according to the expectation value of the energy of the final Hamiltonian at the end of the annealing evolution using criteria of a classical optimization algorithm, for example Basin-Hopping with a gradient free optimizer (COBYLA).

In certain embodiments of the invention, an expectation value is calculated of the energy at the end of the (annealing) evolution.

In certain embodiments, the final Hamiltonian is a spin glass Hamiltonian.

In certain embodiments of the invention, the initial Hamiltonian is given by a homogeneous local interaction in the x-axis and/or the z-axis.

The invention may involve a variational approach, referring to a hybrid protocol in the sense that the method requires both classical and quantum steps. In such embodiments, the method comprises the evaluation of a cost function calculated by the given quantum hardware and the function is optimized by a classical computer). In such an approach, in each iteration the quantum annealer has a set of points $p_j$ that depends on a set of parameters $y_j$ (initially random).

The method of the invention can be used to all various optimization problems, such as factorization problems and the ground state of molecules, problems in finance etc.

In a second aspect, the invention refers to a data processing apparatus/device/system comprising means for carrying out (the steps of) the method of any of claims 1 to 12.

In a third aspect, the invention refers to a computer program (product) comprising instructions which, when the program is executed by a computer, cause the computer to carry out (the steps of) the methods described herein.

In a fourth aspect, the invention refers to a computer-readable (storage) medium comprising instructions which, when executed by a computer, cause the computer to carry out (the steps of) the methods described herein.

In a fifth aspect, the invention refers to the use of an auxiliary Hamiltonian in a computer-implemented method of solving an optimization problem using a quantum annealer.

An annealing (total) Hamiltonian is used, possibly together with an initial Hamiltonian and a problem (final) Hamiltonian in a method of solving an optimization problem, in particular wherein the auxiliary Hamiltonian is weighted by at least one schedule function that is parametrized, in particular by moving points that are interpolated by at least one cubic function.

In a sixth aspect, the invention refers to a computer-implemented method for optimizing a quantum annealing process. In the method, a variational classical-quantum annealing (VCQA) is utilized in conjunction with a hybrid optimizer.

In certain embodiments, the hybrid optimizer performs classical computational processes using a quantum computer such as trapped ions, superconducting circuits or neutral atoms, non-VCQA based quantum annealing, and/or sequential optimization models using classical optimization.

In certain embodiments of the method, a quantum annealing is performed using an incoherent version of VCQA, wherein the annealing time exceeds the coherence time of a quantum computing device used.

Other features and advantages of the invention will be apparent upon reading the detailed description and examples and reviewing the accompanying drawings of the figures.

## Detailed Description of the Invention

Various embodiments of the invention are further described in more detail with reference to the accompanying drawings. However, the invention may be embodied in many other forms and should not be construed as limited to any certain structure or function discussed in the following description.

According to the description, it will be apparent to the ones skilled in the art that the scope of the invention encompasses any embodiment thereof, which is disclosed herein, irrespective of whether this embodiment is implemented independently or in concert with any other embodiment of the invention. For example, the method disclosed herein may be implemented in practice by using any numbers of the embodiments provided herein. Furthermore, it will be understood that any embodiment of the invention may be implemented using one or more of the elements presented in the appended claims.

In certain aspects, the invention relates to a novel variational method or algorithm (protocol) tailored for quantum annealing systems such as those based on superconducting circuits, trapped ions, quantum dots or photonic systems, which are advanced quantum computers capable of executing time-dependent Hamiltonians. The prime objective of this protocol is to achieve optimal approximations of ground states within the coherent time frame of the device.

Specifically, the invention involves defining an annealing (also called total) Hamiltonian that consists of three pivotal sub-Hamiltonians. The first sub-Hamiltonian, called initial Hamiltonian, is characterized by a uniform transverse field over each qubit. The second sub-Hamiltonian, called problem Hamiltonian, encodes the solution to the problem being solved in its ground state. Finally, the third sub-Hamiltonian, called auxiliary Hamiltonian, consists of local fields over each qubit.

Each of these sub-Hamiltonians is steered by a distinct parametrized time-dependent function termed the "schedule function." In certain embodiments, the parametrization of these schedule functions is accomplished through the application of the Hermite cubic interpolator across specified points. Notably, the y-component of these points remains variable and acts as a variational parameter. By optimizing these parameters the protocol can reach the optimal approximation of the ground state of the problem Hamiltonian within the coherent operating window of a quantum annealer.

### 1) Adiabatic quantum computing and quantum annealers

Adiabatic quantum computing (AQC) differs from gate-based quantum computing or digital quantum computing. Roughly speaking, in AQC the problem to be solved is codified in a Hamiltonian, called problem Hamiltonian, and the solution of the problem is contained in the ground state of the problem Hamiltonian. To reach the desired ground state, AQC performs an adiabatic quantum evolution starting from the ground state of another Hamiltonian, whose ground state is known and easy to prepare. In the AQC paradigm, a time-dependent Hamiltonian defines the adiabatic quantum evolution and characterizes the effectiveness of the algorithm. Such time-dependent Hamiltonian can be written as

$$H(t) = [1 - \lambda \left(\frac{t}{\tau_{ad}}\right)]H_i + \lambda \left(\frac{t}{\tau_{ad}}\right) H_p,$$

where $\tau_{ad}$ is the total time of the adiabatic evolution, and $\lambda$ is known as the schedule function, with $\lambda(0) = 0 \Rightarrow H(0) = H_i$ and $\lambda(1) = 1 \Rightarrow H(\tau_{ad}) = H_p$. The corresponding timeevolution operator is given by

$$U(t) = T e^{\frac{-i}{\hbar} \int_0^t H(s)ds}$$

where T is the time-ordering operator. In general, the initial Hamiltonian is given by

$$H_i = \omega_x \sum_j \sigma_j^x,$$

whose ground state is $|---\cdots\rangle$, where $|-\rangle = (|0\rangle - |1\rangle)/\sqrt{2}$.

According to the quantum adiabatic theorem, if $\tau_{ad} \gg 1/\Delta$ with delta the energy gap between the instantaneous ground and first exited state, the quantum state of the system during the evolution will be the instantaneous ground state of the Hamiltonian H(t). This implies that, upon completion of the evolution, one can reach the ground state of the problem Hamiltonian and obtain the desired solution.

Although the AQC paradigm differs significantly from gate-based quantum computing, it can be demonstrated that they are equivalent. This means they are both universal and scale similarly across various problems. Specifically, the depth of the circuit scales in the same manner as the total adiabatic time. This suggests that the utility of each paradigm is dependent on the capabilities of the hardware.

In the era of Noisy Intermediate-Scale Quantum (NISQ) technology, gate-based quantum computing is constrained by the coherence time of current quantum processors, which limits the circuit depth. Similarly, for the Adiabatic Quantum Computing (AQC) paradigm to execute an algorithm, the adiabatic time often exceeds the device's coherence time for any industrially relevant problem. In this context, the experimental implementation of the AQC paradigm is referred to as quantum annealing or incoherent adiabatic quantum computing. Here, the D-Wave company has 1000 or more qubits in some of their devices.

In a quantum annealer, the initial Hamiltonian is named mixing Hamiltonian, and is given by $H_i$ described above. The problem Hamiltonian is typically described by a spin-glass system of the form

$$H_p = \sum_j \omega_j^z \sigma_j^z + \sum_{j,k} g_{jk} \sigma_j^z \sigma_k^z$$

which can solve a large family of classical problems called quadratic unconstrained binary optimization (QUBO) problems.

### 2) Variational quantum algorithms

Variational quantum algorithms (VQA) are a family of hybrid quantum-classical algorithm, that mix the power of quantum computing with subroutines that contain classical optimization algorithms.

The variational quantum algorithms uses the concept of the variational quantum ansatz. This is a parametrized quantum state, which can be produced by a parametrized quantum circuit in the case of digital quantum computers, or by a parametrized evolution in the case of analog quantum computers, or a combination of both in the case of digital-analog paradigm. Once the ansatz is built, then a cost or objective function is evaluated using the quantum processor. The objective function serves as the driving force of these algorithms, it encapsulates the problem to be solved and quantifies its outcome. Later, the expectation value of a cost function is the input for a classical optimization algorithm, which updates the parameters of the variational ansatz to obtain a quantum state that maximizes or minimizes the objective function according to the requirement of the problem.

The Variational Quantum Algorithm (VQA) can be summarized as follows: It begins with an initial set of parameter values for the variational quantum circuit or quantum evolution, which generates the variational quantum ansatz. This quantum state is then measured to ascertain its quantum properties. The measurements are used to evaluate the objective function. At this stage, classical optimization algorithms are employed to adjust the circuit parameters in a way that enhances the value of the objective function. The algorithm iteratively cycles between quantum computation and classical optimization until it converges on a solution where the objective function achieves an optimal value.

The Variational Quantum Algorithm is particularly advantageous for extracting utility from quantum computers in the Noisy Intermediate-Scale Quantum (NISQ) era. It leverages quantum processors for tasks that can be challenging to perform classically, such as computing properties of many-body systems, while utilizing classical computers to find solutions through established optimization algorithms. Consequently, VQAs can be used for a broad spectrum of applications. These include quantum chemistry, where they can help determine molecular properties for drug synthesis; machine learning, particularly in the context of classification problems; and finance, where they can optimize portfolios, among other uses.

### 3) Quantum Annealers

Quantum annealers are specialized quantum computing devices designed to solve optimization and combinatorial problems using the technique of quantum annealing, that is, an incoherent adiabatic evolution. Quantum annealing leverages the principles of quantum mechanics, specifically quantum tunneling to find the optimal solutions to complex problems.

In general, current quantum annealers are primarily capable of solving the family of Quadratic Unconstrained Binary Optimization (QUBO) problems. These encompass a large set of optimization problems, particularly those of a combinatorial nature. In this context, two key aspects of quantum annealers and quantum processors at large are the number of qubits and their interconnectivity. These properties can be visualized as a graph where the nodes represent the qubits and the edges denote connectivity. These factors directly influence the types of QUBO problems that can be efficiently solved.

The D-Wave machine is one of the most significant platforms for performing quantum annealing, boasting over 5000 qubits in the Advantage version and approximately 10 connections per qubit in the Pegasus graph. The D-Wave machine is a quantum annealer that utilizes superconducting flux qubits as fundamental components, with programmable interactions that enable it to tackle nearly any QUBO problem. Additionally, D-Wave allows for various schedule functions, which are associated with the scheduling followed for the different magnetic fluxes over the various loops that control each qubit's energy and coupling strength. These features make D-Wave one of the most flexible quantum annealers available today. However, due to the machine's extremely short coherence time of a few nanoseconds, the extent of D-Wave's quantum nature remains unclear.

### 4) Engineering schedule functions

In certain embodiments, the method for engineering schedule functions for quantum annealers includes the use of appropriate quantum computing components and their interconnections, as well as the mechanisms for implementing quantum-classical communication between the quantum annealer and the classical processor.

In one aspect, the present invention relates to a method for designing three optimal schedule functions suitable to be implemented in a general quantum annealing process in current devices, for example a superconducting qubit device, as described herein. In specific embodiments, the invention may be applied to optimization problems, like portfolio optimization, cryptography, and logistic problems.

Superconducting circuits are a leading physical implementation for quantum computing and quantum annealing devices, where the Josephson junctions (JJ), a non-linear inductor, allows to build qubits and superconducting quantum interference devices (SQUIDs). JJs consist of two superconducting electrodes separated by a thin insulating barrier. These junctions exhibit quantum effects, such as tunneling of Cooper pairs (pairs of electrons), which are essential for creating qubit states. A SQUID is basically a superconducting loop interrupted by one or more JJs, the inclusion of SQUIDs allows for the implementation of tunable qubits and tunable couplings, which can be tuned by the use of magnetic flux through the SQUID.

Specifically, a superconducting annealer like D-wave uses flux qubits coupled inductively via SQUIDs, obtaining qubit energy and coupling strength proportional to external magnetic flux.

Thus, the qubit energy and coupling can be tuned during the experiment. In such flux qubits, the quantum states are given by the direction of the persistent current in a superconducting loop, that defines the qubit. These systems are manufactured using thin-film technology and operated at temperatures below 30 mK, with measurements performed using integrated on-chip instruments via microwave driving.

An expectation value, generally denoted as $\langle A \rangle$, is the average value of a physical observable $A$ in a given quantum state. Then, in order to obtain a given expectation value, it is necessary to prepare a required quantum state and to perform the same measurement several times, until the statistical error becomes smaller than a given threshold.

The method for designing schedule functions for optimal quantum annealing employs a global optimization algorithm, such as the basin-hopping routine, to minimize the expectation value of the energy of the problem Hamiltonian. This expectation value is calculated using the final state produced in the annealing process and the minimization process then updates the three parametrized schedule functions.

The invention refers to a computer-implemented method for an optimal quantum annealing for a quantum annealer. In an optimal regime, the annealing process provides an approximation to the ground state of the problem Hamiltonian during the coherence time of the quantum device used.

In certain embodiments of the method of the invention, a general adiabatic evolution is performed, i.e., an evolution given by the time-dependent Hamiltonian

$$H(t) = f_1\left(\frac{t}{\tau_{ad}}\right) H_i + f_2\left(\frac{t}{\tau_{ad}}\right) H_p + f_3\left(\frac{t}{\tau_{ad}}\right) H_{aux}$$

where $f_1(0) = f_2(1) = 1$ and $f_1(1) = f_2(0) = f_3(0) = f_3(1) = 0$. The Hamiltonian $H_{aux}$, is an auxiliary Hamiltonian that modifies the energy landscape during the evolution. As this Hamiltonian can be implemented in a quantum annealer, it will take the form

$$H_{aux} = \sum_j \Omega_j \sigma_j^z$$

This local energy per qubit will help to avoid the degeneracy point, as a suitable choice of $\Omega_j$ will increase the energy gap of the instantaneous Hamiltonian, by adding extra energy to given configurations. Specifically, one can consider that the auxiliary Hamiltonian is the same as the local part of the problem Hamiltonian, obtaining then the time-dependent Hamiltonian

$$H(t) = f_1\left(\frac{t}{\tau_{ad}}\right) \cdot \omega_x \sum_j \sigma_j^x + \left[f_2\left(\frac{t}{\tau_{ad}}\right) + f_3\left(\frac{t}{\tau_{ad}}\right)\right] \cdot \sum_j \omega_j^z + f_2\left(\frac{t}{\tau_{ad}}\right) \cdot \sum_{j,k} g_{j,k} \sigma_j^z \sigma_k^z$$

which means that the local and the bi-local terms evolve independently. In order to find the optimal schedule functions ($f_1, f_2, f_3$) they are parametrized as follows: For the function $f_j$, $n_j$ parameters are defined in the range $[0,1]$ given by $\{y_{j,1}, y_{j,2}, ..., y_{j,n_j}\}$ which define $n_j + 2$ point of the form

$$p_{j,k} = \left(x_{j,k}, y_{j,k}\right)$$

Where the first index refers to the schedule function, and the second to the point position. Also, $x_{j,k} = k/(n_j + 1)$, $y_{j,0} = f_j(0)$ and $y_{j,n_j+1} = f_j(1)$. Now, the schedule function $f_j$ can be defined by the interpolation of this set of points. A schedule function suitable for superconducting annealers requires monotonicity among adjacent points, and that the function and its first derivative to be continuous, to avoid discontinuities in the points $p_{j,k}$. All of these requirements may be addressed by the polynomial cubic Hermite interpolator (PCHIP), obtaining a piece-wise schedule function given by

$$f_j(x) = h_{j,k,0} y_{j,k} + h_{j,k,1} y_{j,k+1} + h_{j,k,2} \Delta_j m_{j,k} + h_{j,k,3} \Delta_j m_{j,k+1}$$

For $x_{j,k} < x < x_{j,k+1}$, where $\Delta_j = 1/(\backslash n_j + 1)$ and

$$h_{j,k,0} = \left[1 + 2\left(\frac{x - x_{j,k}}{\Delta_j}\right)\right]\left[1 - \left(\frac{x - x_{j,k}}{\Delta_j}\right)\right]^2$$

$$h_{j,k,1} = \left(\frac{x - x_{j,k}}{\Delta_j}\right)\left[3 - 2\left(\frac{x - x_{j,k}}{\Delta_j}\right)\right]$$

$$h_{j,k,2} = \left(\frac{x - x_{j,k}}{\Delta_j}\right)\left[1 - \left(\frac{x - x_{j,k}}{\Delta_j}\right)\right]^2$$

$$h_{j,k,3} = \left(\frac{x - x_{j,k}}{\Delta_j}\right)^2\left[1 - \left(\frac{x - x_{j,k}}{\Delta_j}\right)\right]$$

And the slope $m_{j,k}$ is selected as

$$m_{j,k} = \frac{2(y_{j,k+1} - y_{j,k})(y_{j,k+1} - yj, k + 1)}{\Delta_j(y_{j,k+2})(y_{j,k})}$$

If and only if $(y_{j,k+1} - y_{j,k})(y_{j,k+1} - yj,k + 1) > 0$, and $m_{j,k} = 0$ for other cases.

The schedule function that has been constructed adjusts the magnetic flux over the qubits (local terms) or couplers (bi-local terms) in accordance with it and the problem Hamiltonian. Given that the parameters $y_{j,k}$ are bounded and the interpolation is monotonic, the schedule function will not necessitate a magnetic flux value beyond the device's capabilities. By fine-tuning the number of parameters, one can ensure that the resulting function does not demand changes at a rate faster than what is feasible with current experimental. $\tau_{ad}$ represents the total time of evolution and must be set to match the device's coherence time.

Next, the evolution using the time-dependent Hamiltonian using the schedule functions calculated with the method above was performed. After completing the evolution, the expectation value was measured of the final Hamiltonian obtaining $E_{y\rightarrow} = \langle\phi_{y\rightarrow}(\tau_{ad})|H_p|\phi_{y\rightarrow}(\tau_{ad}))$, where $y\rightarrow$ refers to the set of parameters, and $|\phi_{y\rightarrow}(\tau_{ad})\rangle$ is the state obtained at the end of the evolution.

Finally using a classical global optimization algorithm, the parameter $y\rightarrow$ was updated, which yields the optimal schedule functions for the task.

**5) Auxiliary Hamiltonian**

The function of the auxiliary Hamiltonian is to alter the energy spectrum of the total Hamiltonian throughout its evolution. In certain, embodiments of the invention, only local terms are used. In that case, the auxiliary Hamiltonian consists of local fields on each spin with a different frequency $\omega_j$, given by

$$H_{aux} = \sum_i \omega_j \sigma_j^\alpha,$$

where $\alpha = \{x, y, z\}$. In certain embodiments, a z-local auxiliary Hamiltonian is used. Alternatively, non-local terms are used in certain embodiments of the invention.

**Examples**

Comparison analysis of different auxiliary Hamiltonians

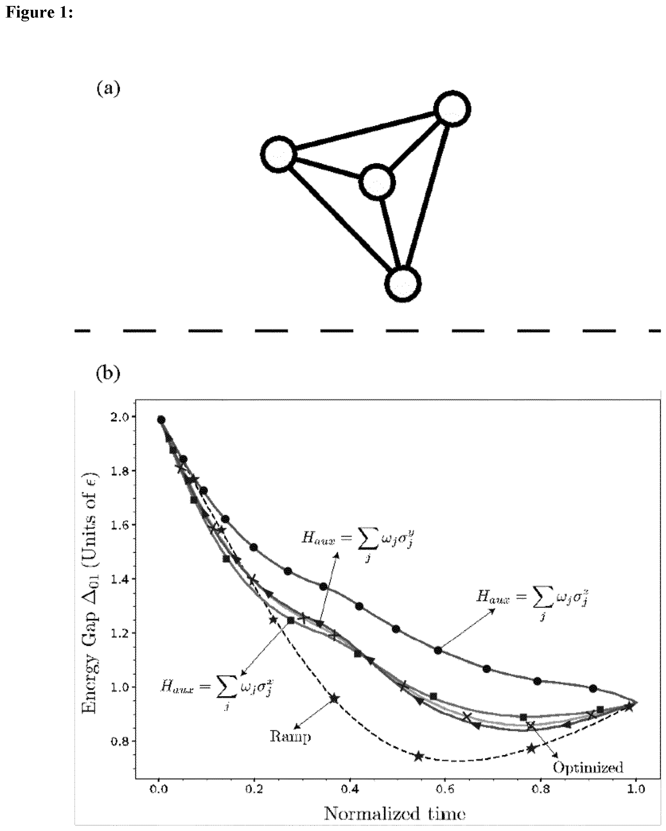

In order to show effect of the auxiliary Hamiltonian on the energy gap, a fully connected configuration comprising four sites was first examined. This configuration, depicted in Figure 1(a), serves as a testing ground for each auxiliary Hamiltonian. More specifically, a account a Hamiltonian represented by a spin glass was taken into account, where the values for $\omega_j$ and $g_{j,k}$ are randomly selected in the range [0,1].

Fig. 1(b) shows the average energy gap, denoted as $\Delta_{01}$, between the ground and first excited state for various strategies across 100 random instances. Initially, the inventors examined the standard ramp schedule function, defined by $F_1 = 1 - t/T$, $F_2 = t/T$, and $F_3 = 0$ (dashed line). Second, the inventors econsidedr the optimization of the schedule functions without the auxiliary Hamiltonian (orange line). In this case, the inventors utilized two parameters per schedule function, resulting in a total of four parameters. Furthermore, for the global optimization the inventors used Basin-Hopping plus a local optimizer given by Sequential Least SQuares Programming (SLSQP) algorithm. Next, the inventors considered the optimization of schedule functions with the addition of the auxiliary Hamiltonian for local operators along the *x*-axis (blue line), *y*-axis (red line) and *z*-axis (green line). For these last three strategies, the inventors needed to optimize over six parameters, as an additional schedule function to drive the auxiliary Hamiltonian has been incorporated.

One observes that the ramp strategy presents the smallest minimum gap at around 0.6 in normalized time, a characteristic that other strategies attempt to avoid. Optimized schedule functions for local interactions along the x and y axes, as well as schedules devoid of an auxiliary Hamiltonian, exhibit a region where the gap is lower than that of the ramp case, located at the beginning of the evolution. This is because of the limited number of parameters involved in the optimization process. Interestingly, the z-local auxiliary Hamiltonian consistently surpasses other strategies in terms of widening the energy gap and is the sole strategy demonstrating a monotonic behavior of the gap during the evolution. This implies that when considering only local terms for the auxiliary Hamiltonian, the z-local auxiliary Hamiltonian emerges as the most effective strategy.

In the case of the z-local strategy, the frequency of each qubit in the auxiliary Hamiltonian aligns with the local term of the final Hamiltonian, allowing the local and bi-local terms to evolve independently. From an experimental perspective, for a programmable quantum annealer, the ability to manipulate the local Hamiltonian terms independently of the bi-local ones appears to be a feasible requirement. This independent manipulation leads to a significant improvement in enlarging the energy gap throughout the entire evolution, thereby reducing the total evolution time required to achieve a desired level of precision for an adiabatic evolution.

Therefore, as an auxiliary Hamiltonian the local part of the final Hamiltonian us used, obtaining the following time-dependent Hamiltonian,

$$H(t) = F_1 \epsilon \sum_j \sigma_j^x + (F_2 + F_3) \sum_j \omega_j \sigma_j^z + F_2 \sum_{j,k;j>k} g_{j,k} \sigma_j^z \sigma_k^z$$

where $F_j \equiv F_j\left(\frac{t}{T}\right)$.

As evidenced by the results shown in Fig. 1, incorporating local terms can prove beneficial in averting degeneracy points during the quantum evolution. These local terms introduce additional energy to specific states within the computational basis, effectively biasing the system towards certain configurations in scenarios where degeneracy might occur. It is important to note that the implementation of these local terms is achievable across a variety of physical quantum computing platforms through the use of local driving fields.

VCQA algorithm for 1D spin systems of different geometries

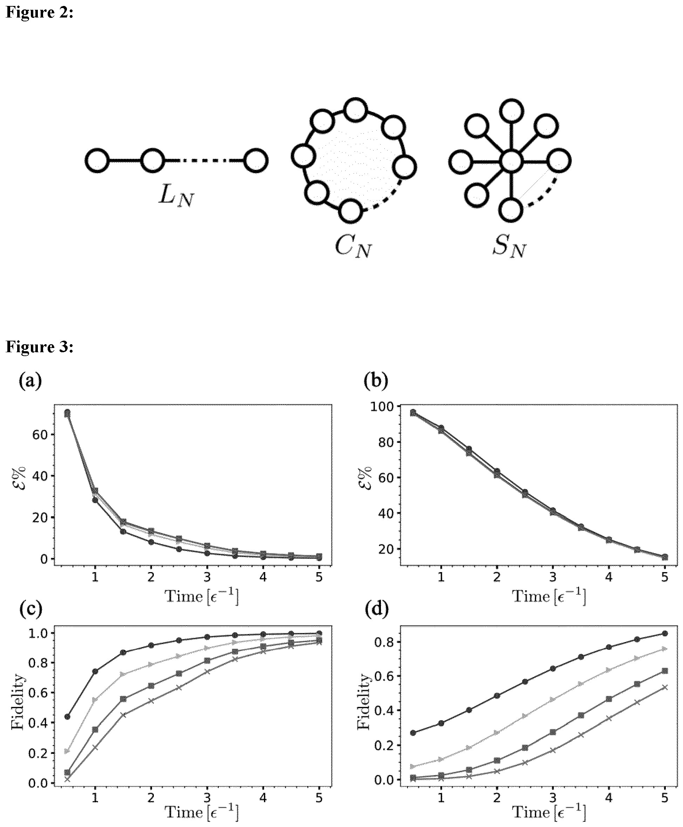

In order to demonstrate the effectiveness of the method (algorithms) of the invention, numerical tests using spin glass Hamiltonians with various types of connectivity were conducted. These include linear ($L_N$), cyclic ($C_N$), and star ($S_N$) arrangements as depicted in Figure 2. For this evaluation, the strategy of the z-local auxiliary Hamiltonian was employed. The inventors considered 100 random instances for the local energy $\omega_j$ and coupling terms $g_{j,k}$ as defined in the problem Hamiltonian for systems of up to 10 qubits. The primary metric employed to evaluate the protocol is the energy percentage error (E%) which was defined as follows:

$$E\% = \left| \frac{\langle \Phi_0 | H_f | \Phi_0 \rangle - \langle \psi_T | H_f | \psi_T \rangle}{\langle \Phi_0 | H_f | \Phi_0 \rangle} \right| \cdot 100\%$$

where $|\Phi_0\rangle$ is the true ground state of $H_f$, and $|\psi_T\rangle$ is the approximated solution obtained by the VCQA algorithm. Finally, the inventors compared all the results with the performance obtained by the typical ramp schedule function, given by, $F_1 = 1 - t/T$, $F_2 = t/T$, and $F_3 = 0$. In all the cases considered each schedule function was parametrized using only two parameters, thus the entire optimization process of this embodiment involves at most six parameters.

$L_N$ **Connectivity.** - As a first example we consider a spin chain with nearest-neighbor interaction, denoted as $L_N$ connectivity, described by the Hamiltonian

$$H_{L_N} = \sum_{j=1}^{N} \omega_j \sigma_j^z + \sum_{j=1}^{N-1} g_j \sigma_j^z \sigma_{j+1}^z,$$

where $\omega_j$ and $g_j$ are selected randomly in the range $]0,1]$. Figure 3(a) shows the average performance of the VCQA protocol over 100 random instances. One can see that the error of the solution reaches below 1% in a time less than $5\varepsilon^{-1}$ for $N \leq 10$ qubits. For superconducting circuits, $\varepsilon$ is of the order of few gigahertz, which implies that the solution can be achieved in a few nanoseconds. Figure 3(b), shows the error for the same random cases using the ramp schedule function, which results in an error exceeding 15% for the same duration. It is important to examine how closely the result aligns with the real ground state, measured by the fidelity $F = |\langle \psi_T \rangle|^2$. Geometric distances may serve as a cost function. It is interesting to showcase them in numerical simulations and observe their correlation with the previously defined error. Figures 3(c) and (d) show the fidelity of the VCQA protocol and of the ramp schedule function, respectively. One can see that in all cases the fidelity of the VCQA protocol is greater than 0.9 in contrast with the ramp schedule function which fails to attain a fidelity larger than 0.85, even for two qubits.

$C_N$ **connectivity.** - Considering a one-dimensional chain with periodic boundary conditions, meaning a cyclic ($C_N$) connectivity, described by the Hamiltonian

$$H_{C_N} = \sum_{j=1}^{N} \omega_j \sigma_j^z + \sum_{j=1}^{N-1} g_j \sigma_j^z \sigma_{j+1}^z + g_N \sigma_N^z \sigma_1^z.$$

Note that the Hamiltonian $H_{L_N}$ and $H_{C_N}$ only differs in the last term, that is, the interaction between the first and last site of the chain. This additional term has an important physical implication, being responsible for the frustration phenomena in antiferromagnetic rings with odd number of sites. As in the previous case, $\omega_j$ and $g_j$ are selected randomly in the range $]0,1]$, and the inventors analyzed the average behavior of the system over 100 random instances.

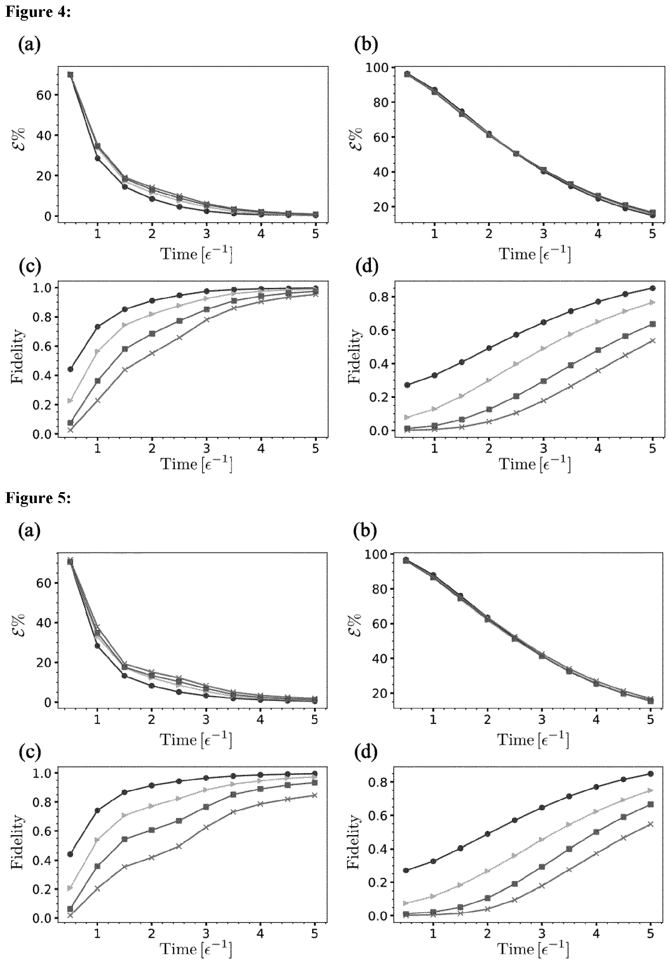

Figure 4 shows the performance of the VCQA algorithm for the $C_N$ configuration. In Figure 4(a) one can see that the results can reach an error of approximately 1% in a time around $5\varepsilon^{-1}$, while the ramp schedule function strategy results in an error exceeding 15% within the same duration, as can be seen in Figure 4(b).

As depicted in Fig. 4(c), one can observe that all the results for up to 10 particles can achieve a fidelity greater than 0.9, with values exceeding 0.98 for up to four sites. In contrast, Figure 4(d) reveals that the ramp schedule function fails to reach a fidelity of 0.85 for the simple case of two sites, and for ten particles, the fidelity falls below 0.55. This suggests that, similar to the previous case, the VCQA algorithm using only six parameters can yield good results within the coherence time of current quantum annealers for at least up to 10 sites.

$S_N$ **connectivity**

The last example that used to test the VCQA algorithm is the $S_N$ connectivity, which means that one site is connected to all the others. This situation is described by

$$H_{S_N} = \sum_{j=1}^{N} \omega_j \sigma_j^z + \sigma_1^z \sum_{j=2}^{N} g_j \sigma_j^z.$$

This connectivity has the capacity to correlate all the sites through the central one, thereby increasing the multipartite quantum correlations within the system. This characteristic sets this system apart from the other examples, making it a valuable test case. Figure 5 shows the performance of the method for the $S_N$ case involving up to 10 sites. Here again, the local energies and couplings were selected randomly, the inventors utilized 100 random instances and plotted the average performance.

As observed in Fig. 5(a), the error attained in this case is slightly larger compared to the other connectivities. However, for 10 qubits, the error is less than 2%. In contrast, for the ramp schedule function strategy, depicted in Fig. 5(b), the error for all cases exceeds 15%, even for the two-qubit case, which in the given scenario yields an error around 0.01% in a time of $5\varepsilon^{-1}$. In the embodiments described here exemplarily, only six parameters were utilized in the algorithm, two per schedule function. In other embodiments, with more parameters being employed in the optimization process, a higher precision is achieved.

Upon analyzing the fidelity that the solution can achieve, Fig. 5(c) reveals that in the worstcase scenario, i.e., 10 qubits, the fidelity is just under 0.85, while the corresponding fidelity for the ramp strategy is less than 0.55. For the simple case of two qubits, the VCQ algorithm achieves a fidelity around 0.99, whereas the ramp strategy falls below 0.85. These results demonstrate that for an $S_N$ connectivity, the VCQA method attains sufficiently accurate solutions within the coherence time of current quantum annealers.

**Figures**

**Figure 1:** (a) Fully connected graph consisting of four sites, considered in order to test the role of an auxiliary Hamiltonian. (b) Instantaneous energy gap $\mathit{\Delta}_{01}$ for total Hamiltonians that differ in the auxiliary Hamiltonian.

**Figure 2:** Graphs that indicate the different types of connectivities of the spin glass problem Hamiltonian considered for the numerical tests.

**Figure 3:** Performance of the VCQA solution as a function of the total annealing time for 2 (line with circles), 4 (line with triangles), 7 (line with squares) and 10 (line with crosses) qubits for the case of $L_N$ connectivity. (a) and (c) show the percentage error and fidelity of the solution using two parameters per schedule functions (six in total). (b) and (d) show the percentage error and fidelity using the standard ramp schedule function.

**Figure 4:** Performance of the VCQA solution as a function of the total annealing time for 2 (line with circles), 4 (line with triangles), 7 (line with squares) and 10 (line with crosses) qubits for the case of $C_N$ connectivity. (a) and (c) show the percentage error and fidelity of the solution using two parameters per schedule functions (six in total). (b) and (d) show the percentage error and fidelity using the standard ramp schedule function.

**Figure 5:** Performance of the VCQA solution as a function of the total annealing time for 2 (line with circles), 4 (line with triangles), 7 (line with squares) and 10 (line with crosses) qubits for the $S_N$ connectivity. (a) and (c) show the percentage error and fidelity of the solution using two parameters per schedule functions (six in total). (b) and (d) show the percentage error and fidelity using the standard ramp schedule function.

**Claims**

1. A computer-implemented method for solving an optimization problem using a quantum annealer, comprising the steps of:

   a) providing a total Hamiltonian that comprises

   - an initial Hamiltonian,
   - a final Hamiltonian, encoding the solution to the problem being solved in its ground state, and
   - an auxiliary Hamiltonian, describing local fields over each of a set of given qubits, wherein each of the Hamiltonians has an independent schedule function, and

   b) performing a time evolution of the total Hamiltonian to obtain the solution to the optimization problem.

2. Method of claim 1, comprising the step of independently optimizing three schedule functions.

3. Method of claim 2, wherein the independent optimization of the three schedule functions process is performed using a classical optimizer.

4. Method of any of claims 1 to 3, wherein exactly two schedule functions are used.

5. The method of any of claims 1 to 4, wherein the time that the quantum annealer needs for the annealing ranges from 4 nanoseconds to 1000 microseconds, and/or wherein a coherent quantum annealing time ranges from 4 nanoseconds to 400 nanoseconds.

6. Method of any of claims 1 to 5, wherein each schedule function is parametrized using a piece-wise cubic interpolator through a set of points defining a parameter space.

7. Method of any of claims 1 to 6, wherein a set of n points is defined as end points for each schedule function wherein 3n represents the total number of parameters, wherein each point, $p_j$, is defined as $p_j = \left(\dfrac{j}{n} + 1, y_j\right)$, wherein the set of all $y_j$ values constitutes the parameters.

8. Method of claim 7, wherein the definition of the end points is given:

   by $p_0 = (1,1)$ and $p_n + 1 = (0,0)$ for the initial Hamiltonian,
   by $p_0 = (0,0)$ and $p_n + 1 = (1,1)$ for the final Hamiltonian, and
   by $p_0 = (0,0)$ and $p_n + 1 = (0,0)$ for the auxiliary Hamiltonian.

9. Method of claim 7 to 8, comprising applying a piece-wise polynomial cubic Hermite interpolator (p-CHIP) algorithm using the end points.

10. Method of any of claims 1 to 9, comprising an iterative process of quantum evolution, energy measurement, and parameters update.

11. Method of any of claims 8 to 10, comprising performing an annealing evolution using the schedule function defined by the parameters $y_j$.

12. Method of any of claims 1 to 11, comprising updating the parameters $y_j$ according to the expectation value of the energy of the final Hamiltonian at the end of the annealing evolution using the criteria of a classical optimization algorithm, specifically Basin-Hopping with a gradient free optimizer (COBYLA).

13. Method of any of claims 1 to 12, comprising determining an expectation value of the energy at the end of the evolution, and/or
    wherein the auxiliary Hamiltonian is given by a local interaction in the x-axis and/or the z-axis.

14. A computer-implemented method for optimizing a quantum annealing process, wherein

    - a variational classical-quantum annealing (VCQA) is utilized in conjunction with
    - a hybrid optimizer,

    wherein the hybrid optimizer performs classical computational processes using a quantum computer such as trapped ions, superconducting circuits or neutral atoms, non-VCQA based quantum annealing, and/or sequential optimization models using classical optimization.

15. Method of any of claims 1 to 14, wherein a quantum annealing is performed using an incoherent version of VCQA, wherein the annealing time exceeds the coherence time of a quantum computing device used.

**Figure 1:**

(a)

(b)

**Figure 2:**

**Figure 3:**

**Figure 4:**

**Figure 5:**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KHEZRI MOSTAFA ET AL: "Customized Quantum Annealing Schedules", PHYSICAL REVIEW APPLIED, [Online] vol. 17, no. 4, 4 April 2022 (2022-04-04), XP093189465, US ISSN: 2331-7019, DOI: 10.1103/PhysRevApplied.17.044005 Retrieved from the Internet: URL:https://journals.aps.org/prapplied/pdf/10.1103/PhysRevApplied.17.044005> [retrieved on 2024-07-24] * abstract * * page 1 - page 18 * | 1-13,15 | INV. G06N10/60 |
| A | SCHULZ SEBASTIAN ET AL: "Guided quantum walk", PHYSICAL REVIEW RESEARCH, [Online] vol. 6, no. 1, 23 August 2023 (2023-08-23) , XP093188808, College Park, US ISSN: 2643-1564, DOI: 10.1103/PhysRevResearch.6.013312 Retrieved from the Internet: URL:https://arxiv.org/pdf/2308.05418v2> [retrieved on 2024-07-23] * the whole document * | 1-13,15 | |

TECHNICAL FIELDS
SEARCHED     (IPC)

G06N

The present search report has been drawn up for all claims

| Place of search | Date of completion of the search | Examiner |
|---|---|---|
| The Hague | 24 July 2024 | Tsakonas, Athanasios |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...........................................................................
& : member of the same patent family, corresponding
    document

EPO FORM 1503 03.82 (P04C01)

Europäisches
Patentamt

European
Patent Office

Office européen
des brevets

**Application Number**

EP 24 15 7549

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-13(completely); 15(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

1. claims: 1-13 (completely); 15 (partially)

   Computer-implemented method for solving an optimization problem using a quantum annealer.
   - - -

2. claims: 14 (completely); 15 (partially)

   Computer-implemented method for optimizing a quantum annealing process.
   - - -